# EUROPÄISCHE PATENTANMELDUNG

(11) **EP 0 809 308 A1**
(43) Veröffentlichungstag der Anmeldung: **26.11.1997**
(21) Anmeldenummer: 96119418.0
(22) Anmeldetag: 04.12.1996
(51) Int. Cl.: H01M 2/04, H01M 10/48

(54) **Wartungsfreier Bleiakkumulator**

(30) Priorität: 23.05.1996 DE 29609239 U
(71) Anmelder: VB Autobatterie GmbH, D-30419 Hannover (DE)
(72) Erfinder: Eisenacher, Werner, 31171 Nordstemmen (DE); Richter, Gerolf, Dr., 31139 Hildesheim (DE)
(74) Vertreter: Kaiser, Dieter Ralf, Dipl.-Ing.

(57) **Zusammenfassung**

Bei einem wartungsfreien Bleiakkumulator mit einem bis auf Entgasungsöffnungen dicht verschlossenen Gehäuse und einem Deckel, der frei ist von Elektrolyteinfüllöffnungen, ist an die Unterseite des Gehäusedeckels (2) ein jeder Zelle zugeordneter zylindrischer Rohrstutzen (3) angeformt, der durch eine geschlossene Spritzhaut (4) abgeschlossen ist. Die Oberfläche der Spritzhaut (4) schließt bündig mit der Oberfläche des Deckels (2) ab.

In der Spritzhaut (4) kann im Randbereich des zylindrischen Rohrstutzens (3) eine ringförmige Vertiefung (5) zur Positionierung eines Werkzeuges (6) vorgesehen sein.

## Beschreibung

Gegenstand der Erfindung ist ein wartungsfreier Bleiakkumulator, der mit einem Deckel, der lediglich Entgasungsöffnungen besitzt, dicht verschlossen ist.

Wartungsfreie Bleiakkumulatoren, insbesondere wartungsfreie Starterbatterien, sind häufig irreversibel verschlossen. Bei solchen Batterien besteht keine Möglichkeit einer Säureprüfung oder einer Säurenachfüllung. Diese kann notwendig werden, wenn beispielsweise durch Fehlbehandlung infolge starker Überladung oder durch längeren Betrieb bei zu hohen Temperaturen der Elektrolytstand über die vorgesehene Mindesthöhe abgesunken ist. In diesem Fall kann die Säureprüfung nur durch ein Zerstören des Deckels durch Bohren einer Öffnung erfolgen. Danach läßt sich eine solche Batterie nur bedingt wieder einsetzen, da es kaum möglich ist, eine solche Bohrung wieder flüssigkeitsdicht zu verschließen. Ein Säureaustritt ist im Bereich einer solchen nachträglichen Bohrung kaum zu vermeiden und kann zu Schäden am Fahrzeug führen, in das die Batterie eingesetzt ist.

Aus der DE PS 27 41 289 ist bereits ein elektrischer Akkumulator bekannt, welcher einerseits mit einer in den Deckel eingebauten Wassernachfüllvorrichtung versehen ist, welcher darüber hinaus neben der Verschlußöffnung eine separate dicht verschließbare Diagnoseöffnung 7 besitzt. Diese Diagnoseöffnung kann mit einem selbsttätig abdichtenden Steckstopfen verschlossen werden, wobei der Steckstopfen an seinem Schaft mit umlaufenden flexiblen Dichtlippen versehen ist.

Der Erfindung liegt die Aufgabe zugrunde, einen wartungsfreien dicht verschlossenen Bleiakkumulator anzugeben, dessen Deckel frei von Einfüllöffnungen ist und der lediglich Entgasungsöffnungen besitzt und welcher dennoch die Möglichkeit einer verhältnismäßig einfachen Elektrolytstandskontrolle eröffnet.

Diese Aufgabe wird erfindungsgemäß mit einem Bleiakkumulator gelöst, wie er in Anspruch 1 definiert ist. Die Unteransprüche enthalten weitere vorteilhafte Ausführungsformen eines erfindungsgemäßen Bleiakkumulators.

Gemäß der Erfindung ist an der Unterseite des Batteriedeckels ein zylindrischer Ansatz angeformt. Bei einer mehrzelligen Batterie sind dementsprechend mehrere zylindrische Ansätze an der Unterseite des Batteriedeckels vorgesehen, die jeder Zelle zugeordnet sind. Diese zylindrischen Ansätze bzw. Rohrstutzen sind durch eine geschlossene Kunststoffspritzhaut verschlossen, die auch den oberen Abschluß des Deckels bildet. Die Spritzhaut ist so ausgebildet, daß sie durch ein einfaches Werkzeug entfernt werden kann, so daß durch den Rohrstutzen hindurch eine Elektrolytstandskontrolle erfolgen kann. Anschließend kann der Rohrstutzen mit einem Druckstopfen verschlossen werden, der die Form eines selbsttätig abschließenden Steckstopfens besitzt und an seinem Schaft mit umlaufenden flexiblen Dichtlippen versehen ist.

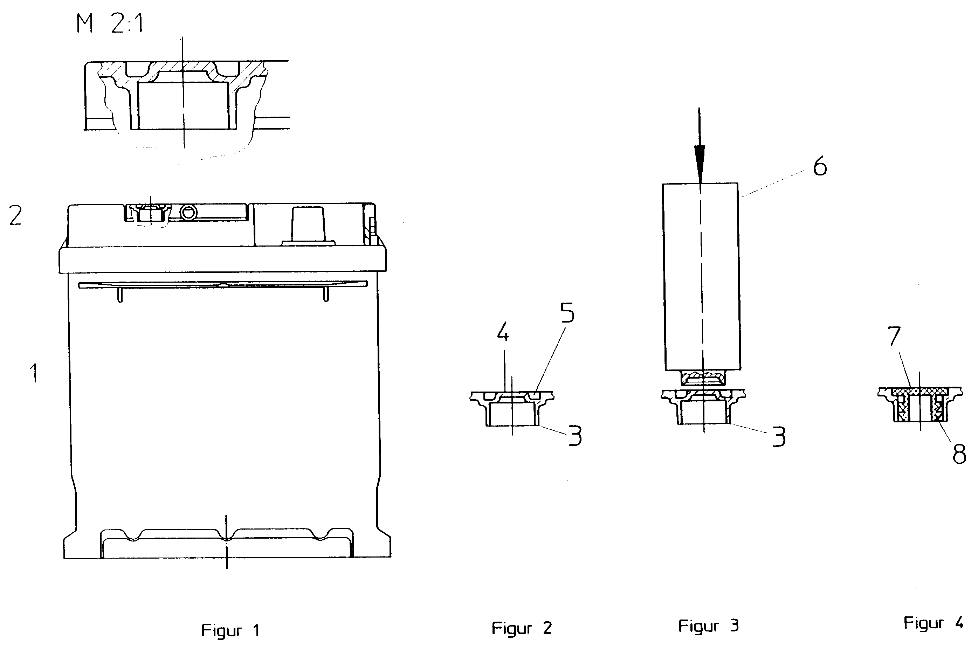

Im folgenden ist der Gegenstand der Erfindung anhand der Figuren 1 bis 4 näher erläutert.

Figur 1 zeigt schematisch eine Batterie mit Batteriegehäuse 1 und Batteriedeckel 2. Der Batteriedeckel besitzt nicht näher dargestellte Entgasungsöffnungen, ist jedoch frei von Elektrolyteinfüllöffnungen. An seine Unterseite ist jedoch ein zylindrischer Rohrstutzen 3 angespritzt, der mittels einer geschlossenen Spritzhaut 4 verschlossen ist. Die Oberfläche dieser Spritzhaut 4 schließt mit der Oberfläche des Deckels bündig ab, so daß der Batteriedeckel leicht gereinigt werden kann, und Etiketten eine Auflage finden und so gut befestigt werden können.

Zweckmäßigerweise ist, wie insbesondere aus Figur 2 ersichtlich, die Spritzhaut 4 mit einer ringförmigen Vertiefung 5 zu versehen. Diese Vertiefung dient der Zentrierung eines aus Stahl hergestellten Lochmeißels 6, der in die Vertiefung 5 eingesetzt und in den Rohrstutzen 3 hineingedrückt wird, wobei die Spritzhaut 4 entfernt wird, so daß durch die dann entstandene Öffnung eine Elektrolytstandskontrolle ermöglicht wird.

Nach Kontrolle und gegebenenfalls Nachfüllen von Elektrolyt kann der Rohrstutzen durch einen Steckstopfen 7 abgeschlossen werden (Figur 4), der ebenfalls mit der Oberfläche der Batterie bündig abschließt und der an seinem Schaft mit umlaufenden flexiblen Dichtlippen 8 versehen ist, die eine einwandfreie Elektrolytabdichtung der Zelle gewährleisten. Die den Rohrstutzen 3 abschließende Spritzhaut 4 besitzt eine Dicke von ca. 1,1 bis 1,5 mm bei einer sonstigen Dicke des Deckelmaterials von 1,8 bis 2,2 mm. Im Bereich der ringförmigen Vertiefung im Randbereich des zylindrischen Rohrstutzens besitzt die Spritzhaut eine etwas geringere Dicke, beispielsweise eine Dicke von 0,5 bis 0,9 mm, vorzugsweise ca. 0,7 mm.

Die erfindungsgemäße Anordnung ermöglicht auch bei einer verschlossenen Batterie, deren Deckel frei von Einfüllöffnungen ist und der lediglich übliche Entgasungsöffnungen besitzt, die nachträgliche Kontrolle des Elektrolytstands der Batterie und gegebenenfalls Wassernachfüllung, ohne die Batterie irreversibel zu schädigen, mit der Möglichkeit, die Batterie wieder dicht zu verschließen und weiter zu verwenden.

## Patentansprüche

1. Wartungsfreier Bleiakkumulator mit einem bis auf Entgasungsöffnungen dicht verschlossenen Gehäuse und einem Deckel, der frei ist von Elektrolyteinfüllöffnungen, dadurch gekennzeichnet, daß an die Unterseite des Gehäusedeckels (2) ein jeder Zelle zugeordneter zylindrischer Rohrstutzen (3) angeformt ist, der durch eine geschlossene Spritzhaut (4) abgeschlossen ist.

2. Wartungsfreier Bleiakkumulator nach Anspruch 1, dadurch gekennzeichnet, daß die Oberfläche der Spritzhaut (4) bündig mit der Oberfläche des Deckels (2) abschließt.

3. Wartungsfreier Bleiakkumulator nach den Ansprüchen 1 oder 2, dadurch gekennzeichnet, daß in der Spritzhaut (4) im Randbereich des zylindrischen Rohrstutzens (3) eine ringförmige Vertiefung (5) zur Positionierung eines Werkzeuges (6) vorgesehen ist.

4. Wartungsfreier Bleiakkumulator nach den Ansprüchen 1 bis 3, dadurch gekennzeichnet, daß die Dicke der Spritzhaut (4) im Bereich der ringförmigen Vertiefung (5) zwischen 0,5 und 0,9 mm, vorzugsweise bei 0,7 mm, beträgt.
